# EUROPÄISCHE PATENTSCHRIFT

(11) **EP 0 605 492 B1**
(45) Veröffentlichungstag und Bekanntmachung des Hinweises auf die Patenterteilung: **17.05.1995**
(21) Anmeldenummer: 92919411.6
(22) Anmeldetag: 17.09.1992
(51) Int. Cl.: G06K 9/46, G06K 9/34

(54) **VERFAHREN ZUM AUFFINDEN VON ZUSAMMENHANGSGEBIETEN BEI BINARISIERTEN BILDMUSTERN**
PROCESS FOR DETECTING CONTINUITY ZONES IN BINARY CODED PATTERNS
PROCEDE DE DETECTION DE ZONES DE CONTINUITE DANS DES STRUCTURES D'IMAGES CODEES BINAIRE

(30) Priorität: 27.09.1991 DE 4132304
(43) Veröffentlichungstag der Anmeldung: 13.07.1994
(73) Patentinhaber: COMPUTER GESELLSCHAFT KONSTANZ MBH, 78467 Konstanz (DE)
(72) Erfinder: BRAUNSTEIN, Ulrich, D-78467 KONSTANZ (DE); MINCK, Konrad, D-78464 KONSTANZ (DE); WUSTMANN, Gerhard, D-78476 Allensbach (DE)
(74) Vertreter: Fuchs, Franz-Josef, Dr.-Ing.
(86) Internationale Anmeldenummer: DE9200800
(87) Internationale Veröffentlichungsnummer: WO9306566

(56) Entgegenhaltungen:
- EP-A- 0 255 627
- EP-A- 0 446 630
- US-A- 4 680 805

## Beschreibung

Die Erfindung betrifft ein Verfahren zum Auffinden von Zusammenhangsgebieten bei binarisierten Bildmustern gemäß dem Oberbegriff des Patentanspruchs 1.

Bei der zahlreichen Verwendung von Dokumenten zu organisatorischen Zwecken in immer mehr Lebensbereichen kann eine kosten- und aufwandsarme Datenerfassung nur automatisch durchgeführt werden. Dabei werden die auf einem Dokument zu lesenden Nutzinformationen, beispielsweise einzelne Schriftzeichen, als Zusammenhangsgebiete erfaßt, aufbereitet und anschließend einem Erkennungsvorgang unterzogen. Dem Dokument EP-A-0 446 630 beispielsweise ist eine entsprechende Vorgehensweise zu entnehmen.

Das Dokument wird durch Abtasten in Bildpunkte aufgelöst und aus den Bildpunkten wird durch Anlegen eines Schwellwerts ein binarisiertes Bildmuster, bestehend aus weißen und schwarzen Pixel, gebildet. Die Extraktion eines in diesem binarisierten Bildmuster befindlichen Zusammenhangsgebiets erfolgt jeweils in der Weise, daß bei Auffinden eines ersten schwarzen Pixels in dessen Umgebung nach weiteren schwarzen Pixel gesucht und für jedes schwarze Nachbarschaftspixel der Suchvorgang in dessen jeweils zugehöriger Umgebung wiederholt wird. Das Zusammenhangsgebiet besteht aus allen aufgefundenen schwarzen Pixel.

Die zu untersuchende Umgebung jedes schwarzen Pixels weist üblicherweise eine zu Beginn des Extraktionsvorgangs festgelegte Anzahl von Nachbarschaftspixel auf, die beispielsweise aus vier, acht, vierundzwanzig usw. gleichzahlig um das Ursprungspixel herum angeordneten Pixel besteht. Wird eine geringe Anzahl von Nachbarschaftspixel, beispielsweise vier oder acht Pixel, für die jeweilige Umgebung festgelegt, stellt das ermittelte Zusammenhangsgebiet wegen nicht ausreichender Erfassung der zum Schriftzeichen gehörigen Pixel gegebenenfalls nur einen Teil der Nutzinformation dar, was zu einem unbefriedigenden Leseergebnis führen kann. Dies ist insbesondere bei drucktechnisch ausgefüllten Dokumenten kritisch, bei denen die Informationen wegen mangelnden Andrucks an einer oder mehreren Stellen unterbrochen sind.

Wählt man zur Abhilfe dieses Problems eine Umgebung mit einer Vielzahl von Nachbarschaftspixel, ist die Gefahr der Zusammenfassung eng benachbarter Nutzinformationen groß, bei der ebenfalls kein erfolgreiches Leseergebnis zustande käme. Darüberhinaus bedarf es bei dieser Art der Untersuchung eines größeren Aufwands, der bei der Vielzahl der zu erfassenden Dokumente eine Reduzierung der Verarbeitungsgeschwindigkeit zur Folge hat.

Das Dokument US-A-4 680 805 offenbart eine Erweiterung einer Pixel-Nachbarschaft zur Konturfindung, jedoch keine Kriterien dafür. Insbesondere geschieht diese Erweiterung nicht dynamisch, sondern hängt von einem voreinstellbaren Pixelabstandsschwellwert ab.

Es ist Aufgabe der Erfindung, ein Verfahren zum Auffinden von Zusammenhangsgebieten bei binarisierten Bildmustern der eingangs genannten Art zu verbessern, durch das auch unterbrochene Nutzinformationen erfaßt werden können.

Diese Aufgabe wird durch die kennzeichnenden Merkmale des Patentanspruches 1 gelöst.

Beginnend mit der Wahl einer geringen Anzahl von Nachbarschaftspixel für die jeweilige Umgebung eines aufgefundenen schwarzen Pixels kann ein erstes Zusammenhangsgebiet schnell gebildet werden. Dies gewährleistet das Auffinden von Zusammenhangsgebieten, die nicht in mehrere Teile zerfallen oder bei denen der Zerfall derart ausgebildet ist, daß der größte Teil der Nutzinformation zusammenhängend zur Verfügung steht.

Eine beispielsweise durch ein umschreibendes Rechteck definierte Ist-Größe des Zusammenhangsgebiets wird mit einer vorgebbaren Maximal- und Minimalgröße verglichen. Abhängig davon, ob die Maximal- und Minimalgröße unterschritten wird, folgt ein Verfahrensschritt, in dem die Umgebung jedes Pixels des bereits im vorherigen Verfahrensschritt ermittelten Zusammenhangsgebiets anhand einer gegenüber der festgelegten Anzahl erweiterten Anzahl von Nachbarschaftspixel untersucht wird. Auf diese Weise lassen sich alle die Nutzinformationen erfassen, die beispielsweise aus drucktechnischen Gründen eine oder mehrere, gegebenenfalls nur geringfügige, Unterbrechungen aufweisen.

Mit der herkömmlichen Methode der Untersuchung einer möglichst kleinen Umgebung zur Erzielung eines möglichst hohen Durchsatzes ist dies nicht möglich. Die Festlegung einer erweiterten Anzahl von Nachbarschaftspixel pro Umgebung für alle Extraktionsvorgänge birgt das Risiko der unerwünschten Zusammenfassung von eng benachbarten Informationen sowie die Berücksichtigung von Verunreinigungen, die keine Nutzinformation darstellen, in sich.

Gemäß der Erfindung werden die Ist-Größe des bereits gebildeten Zusammenhangsgebiets mit einer Minimalgröße verglichen und bei deren Überschreitung ein Klassifikationsverfahren für das Zusammenhangsgebiet durchgeführt. Nur für den Fall, daß das Zusammenhangsgebiet nicht erkannt werden kann, erfolgt anschließend die Untersuchung der jeweiligen Umgebung mit der erweiterten Anzahl von Nachbarschaftspixel. Durch die zusätzlich durchgeführte Vergleichsoperation werden die aufgefundenen Zusammenhangsgebiete, deren Größe jeweils zwischen der Minimal- und der Maximalgröße liegen und somit gegebenenfalls die Erfassung der Nutzinformation bereits zur Folge haben, einer nachfolgenden Auswertung unterzogen. Ansonsten folgt für zu klein befundene Zusammenhangsgebiete unmittelbar nach dem Vergleich mit der Maximalgröße die Untersuchung der erweiterten Umgebung.

Mit dem Verfahren gemäß vorliegender Erfindung können sowohl ununterbrochene Nutzinformationen schnell aufgefunden als auch in mehrere Teile zerfallene Informationen erfolgreich erfaßt werden.

Gemäß einer Weiterbildung der Erfindung wird das aus der Untersuchung der erweiterten Umgebung gebildete Zusammenhangsgebiet - unabhängig davon, ob zuvor eine Auswertung stattgefunden hat oder nicht - auf das Vorliegen zusätzlicher schwarzer Pixel überprüft. Ist dies der Fall, erfolgt für die daraus resultierende Ist-Größe des Zusammenhangsgebiets ein erneuter Vergleich mit der oder den Vergleichsgrößen. Folglich wird das Extraktionsverfahren nur bei einer durch die Untersuchung einer Mehrzahl von Pixel auftretenden Vergrößerung des Zusammenhangsgebiets fortgeführt.

Die jeweils zu untersuchende Umgebung kann unter Umständen aus einer beliebigen Anzahl von gleichmäßig um ein schwarzes Pixel herum angeordneten Nachbarschaftspixel gebildet werden. Eine Beschränkung wird gemäß einer anderen Weiterbildung der Erfindung dadurch erreicht, daß das jeweilige Zusammenhangsgebiet für den Fall nicht weiter untersucht wird, daß dessen Ist-Größe die vorgegebene Maximalgröße überschreitet.

Die Erfindung wird anhand eines in der Zeichnung dargestellten Ausführungsbeispiels näher erläutert.

Im einzelnen zeigen
- FIG 1: ein binarisiertes Bildmuster mit den zu lesenden Nutzinformationen am Beispiel einer Folge von mehreren Schriftzeichen,
- FIG 2: einen Extraktionsvorgang gemäß der Erfindung für einen vergrößert dargestellten Teil eines unterbrochenen Schriftzeichens, und
- FIG 3: das Flußdiagramm zum Auffinden eines Zusammenhangsgebietes bei einem binarisierten Bildmuster.

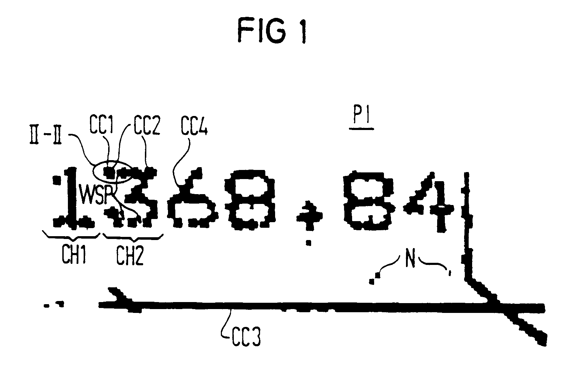

FIG 1 zeigt ein binarisiertes Bildmuster PI, das im Wege der Aufbereitung eines in einer optischen Bildabtasteinrichtung in Bildpunkte aufgelösten Dokuments erzeugt wird. Das aus weißen und schwarzen Pixel bestehende Bildmuster PI enthält mehrere Informationen, von denen einzelne Schriftzeichen, z.B. CH1 und CH2, die zu lesenden Nutzinformationen darstellen. Darüber hinaus können auch Störinformationen, beispielsweise in Form von Verunreinigungen N, auftreten. Das binarisierte Bildmuster PI resultiert im gewählten Beispiel aus einem drucktechnisch ausgefüllten Dokument, bei dem eine Folge von mehreren Schriftzeichen von einem Nadeldrucker auf das Dokument aufgebracht worden ist. Beim Druckvorgang für jeweils ein Schriftzeichen kann es wegen mangelnden Andrucks zu Unterbrechungen an einer oder mehreren Stellen kommen. Im vorliegenden Beispiel weist das Schriftzeichen "3" an drei Stellen Unterbrechungen auf, die hier aus einer oder mehreren Weißspalten WSP bestehen.

Der Vorgang zum Auffinden eines Zusammenhangsgebiets beginnt mit dem Abtasten des binarisierten Bildmusters PI in einer Abtastrichtung auf das Vorliegen eines ersten schwarzen Pixels. Sobald das schwarze Pixel am linken oberen Rand eines Schriftzeichens CH2 aufgefunden wird, erfolgt eine Untersuchung einer zugehörigen Umgebung. Diese Umgebung weist eine festgelegte Anzahl von beispielsweise acht Nachbarschaftpixel auf, die gleichzahlig um das aufgefundene Ursprungspixel herum in Form eines Quadrates angeordnet sind. Das sukzessive Auffinden eines gesamten Zusammenhangsgebietes CC1 wird dadurch erreicht, daß die Umgebung des zuerst aufgefundenen Schwarzpixels auf das Vorliegen weiterer schwarzer Pixel überprüft und für jedes in der Nachbarschaft aufgefundene schwarze Pixel der Suchvorgang in dessen jeweiliger Umgebung wiederholt werden.

Der Extraktionsvorgang für das Zusammenhangsgebiet CC1 ist beendet, sobald kein weiteres schwarzes Pixel für das Anbinden einer Nachbarschaft mehr vorhanden ist. Durch die im oberen, horizontal ausgebildeten Balken des Schriftzeichens CH2 entstandene Weißspalte WSP wird mit der gewählten geringen Anzahl von Nachbarschaftspixel pro Umgebung nur ein Teil des Schriftzeichens CH2 als Zusammenhangsgebiet CC1 erfaßt. Die resultierende Ist-Größe des aufgefundenen Zusammenhangsgebietes CC1 wird anschließend mit einer Maximalgröße verglichen, deren horizontale und vertikale Ausdehnung abhängig von der Art und/oder der Größe der zu lesenden Nutzinformationen beliebig eingestellt werden kann. Ist-Größe und Maximalgröße können dabei beispielsweise durch umschreibende Rechtecke, jeweils bestehend aus einer in horizontaler und vertikaler Richtung ausgewählten Anzahl von Pixel, definiert werden. Im Ausführungsbeispiel wird eine Maximalgröße gewählt, die annähernd die Gesamtgröße eines Schriftzeichens erreicht.

Die festgestellte Ist-Größe des Zusammenhangsgebiets CC1 unterschreitet die vorgegebene Maximalgröße wesentlich, was zu einer Fortsetzung des Extraktionsvorganges führt. Dabei wird eine gegenüber der festgelegten geringen Anzahl von acht Nachbarschaftspixel erweiterte Anzahl von beispielsweise vierundzwanzig Nachbarschaftspixel gewählt, mit der die Umgebung jedes Pixels des zuvor bereits gebildeten Zusammenhangsgebiets CC1 auf das Vorliegen weiterer schwarzer Pixel untersucht wird. Durch die Überprüfung jeweils einer erweiterten Umgebung gelingt es, die Weißspalte WSP zu überwinden. Die Ursache hierfür liegt darin, daß die jeweiligen Umgebungen der am rechten Rand des bereits aufgefundenen Zusammenhangsgebiets CC1 angeordneten schwarzen Pixel in den an die Unterbrechung angrenzenden Teil des Schriftzeichens CH2 hineinragen und somit zusätzliche schwarze Pixel enthalten.

Aus der Festlegung der erweiterten Anzahl von Nachbarschaftspixel kann folglich ein größeres Zusammenhangsgebiet CC2 aufgefunden werden, das aus zwei durch eine Weißspalte WSP unterbrochenen Teilen besteht. Das in mehrere Teile zerfallene Schriftzeichen CH2 kann nicht komplett gelesen werden, da die restlichen Bruchstellen jeweils mehr als eine Weißspalte WSP umfassen. Für den Fall, daß die beiden im unteren Querbalken des Schriftzeichens CH2 vorhandenen Bruchstellen jeweils lediglich eine Weißspalte WSP aufweisen, kann die gesamte Nutzinformation mit der im Ausführungsbeispiel gewählten erweiterten Anzahl von vierundzwanzig Nachbarschaftspixel extrahiert werden.

Außer der Maximalgröße ist eine Minimalgröße ebenfalls als umschreibendes Rechteck vorgebbar, bei dessen Unterschreiten der Extraktionsvorgang in der zuvor angegebenen Weise fortgeführt wird. Für den Fall, daß die Ist-Größe eines aufgefundenen Zusammenhangsgebiets, z.B. CC4, die Minimalgröße überschreitet die Maximalgröße hingegen unterschreitet, wird das Zusammenhangsgebiet, z.B. CC4, zuerst einem Klassifikator zugeführt. Bewirkt die Klassifikation das Erkennen eines gültigen Schriftzeichens, ist der Extraktionsvorgang damit bereits beendet. Ansonsten folgt eine Ausdehnung der zu untersuchenden Umgebung gemäß der Erfindung.

Übertrifft ein aufgefundenes Zusammenhangsgebiet, z.B. CC3, sogar die vorgegebene Maximalgröße, wird der Extraktionsvorgang beendet, da die Erfassung einer Nutzinformation nicht möglich ist. Das gleiche gilt auch für zusammengeklebte Schriftzeichen, die durch Wahl einer zu großen Anzahl von Nachbarschaftspixel entstehen können.

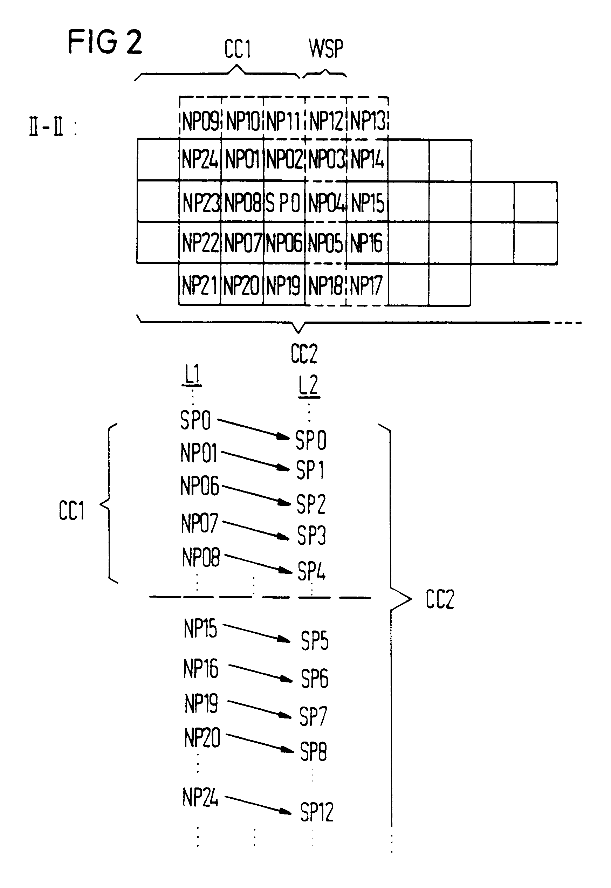

In FIG 2 ist der Extraktionsvorgang gemäß der Erfindung für einen vergrößerten Teil des Zusammenhangsgebiets CC2 gemäß FIG 1 dargestellt. Die Zeichnung umfaßt dabei einen Ausschnitt II-II, der die Bruchstelle in Form einer Weißspalte WSP enthält, sowie eine teilweise Auflistung der zu den aufgefundenen Zusammenhangsgebieten CC1 und CC2 gehörigen schwarzen Pixel. Wie bereits erwähnt, wird durch Abtastung des binarisierten Bildmusters in einer bestimmten Abtastrichtung ein erstes schwarzes Pixel aufgefunden, von dem aus sich ein Zusammenhangsgebiet extrahieren läßt. Ein Anbindungsvorgang für ein aufgefundenes schwarzes Pixel, beispielsweise das Pixel SP0, erfolgt in der Weise, daß die aus acht Nachbarschaftspixel NP01, NP02...NP07, NP08 bestehende Umgebung des Ursprungspixels SP0 auf das Vorliegen weiterer schwarzer Pixel untersucht wird. In eine erste Liste L1 werden die Adressen des Ursprungspixels, z.B. SP0, gefolgt von den Adressen der Nachbarschaftspixel NP01, NP06, NP07, NP08, die als schwarze Pixel in der Achter-Nachbarschaft erkannt werden, eingetragen.

Im nächsten Schritt wird die Adresse des aufgefundenen Pixels, z.B. SP0, in der Liste L1 gelöscht und zur endgültigen Speicherung in eine weitere Liste L2 übertragen. Das in der Liste L1 an der nächstfolgenden Speicherstelle enthaltene Nachbarschaftspixel NP01 bildet das Ursprungspixel SP1 für die Adressierung seiner zugehörigen Umgebung mit den acht Nachbarschaftspixel NP09, NP10...NP23, NP24. Von diesen Nachbarschaftspixel ergeben erneut nur die schwarzen Pixel weitere Eintragungen in die Liste L1, die jedoch aus Übersichtlichkeitsgründen in der Zeichnung nicht mehr aufgeführt sind. Die Adresse des für die zuletzt erfolgte Anbindung einer zugehörigen Umgebung vorgesehenen Pixels NP01 wird in der Liste L1 gelöscht und in die Liste L2 als Ursprungspixel SP1 eingetragen.

In gleicher Weise werden die jeweiligen Umgebungen der Nachbarschaftspixel NP06, NP07 und NP08 gebildet, ihre Adressen gelöscht und engültig als Adressen von Ursprungspixel SP2, SP3, SP4 in der Liste L2 hinterlegt. Nach jedem Anbindungsvorgang der Nachbarschaftspixel werden die jeweils den Ursprung bildenden schwarzen Pixel SP0, SP1,... in weiße Pixel umgewandelt, da ansonsten die zugehörigen Umgebungen mehrmals untersucht würden, und dadurch nur unnötige Redundanz die Folge wäre. Das Zusammenhangsgebiet CC1 kann anhand der in der Liste L2 eingetragenen Adressen aller aufgefundenen schwarzen Pixel ermittelt werden.

Aus der vergrößerten Darstellung eines Teils der zu lesenden Nutzinformation wird deutlich, daß ausgehend von den am rechten Rand des extrahierten Zusammenhangsgebiets CC1 angeordneten Pixel SP0, NP06, NP19 keine der jeweils zugehörigen Umgebungen in den auf die Unterbrechung folgenden Teil der Nutzinformation hineinragt. Zwischen den benachbarten Teilen liegt eine lediglich aus weißen Pixel NP04, NP05 und NP18 zusammengesetzte Weißspalte WSP. Die Erfassung beider Teile durch Auffinden des Zusammenhangsgebiets CC2 wird erst dadurch möglich, daß für jedes in der Liste L2 endgültig hinterlegte Ursprungspixel eine jeweils zugehörige vergrößerte Umgebung mit beispielsweise vierundzwanzig Nachbarschaftspixel auf das Vorliegen weiterer schwarzer Pixel untersucht wird.

Zu diesem Zweck wird der Inhalt der Liste L2 in die Liste L1 übertragen, so daß die Adressen aller schwarzen Pixel des bereits ermittelten Zusammenhangsgebiets CC1, ergänzt um die durch die erweiterte Umgebung hinzukommenden schwarzen Pixel, zuerst in der Liste L1 und anschließend endgültig in der Liste L2 eingetragen sind. Die Umgebung des schwarzen Pixels SP0 umfaßt somit zusätzlich zu den im ersten Verfahrensschritt aufgefundenen Pixel die Nachbarschaftspixel NP15, NP16, NP19... NP24. Von diesen schwarzen Nachbarschaftspixel gehören zwei Pixel NP15 und NP16 bereits zum angrenzenden Teil der zu lesenden Information, so daß das sukzessive Auffinden des unterbrochenen Zusammenhangsgebiets CC2 sichergestellt ist. Die durch die erweiterte Anzahl von Nachbarschaftspixel zusätzlich aufgefundenen schwarzen Pixel führen zu weiteren Eintragungen ihrer Adressen in die Liste L1 und ergeben weitere, in der Liste L2 endgültig hinterlegte Ursprungspixel SP5, SP6, SP7... SP12.

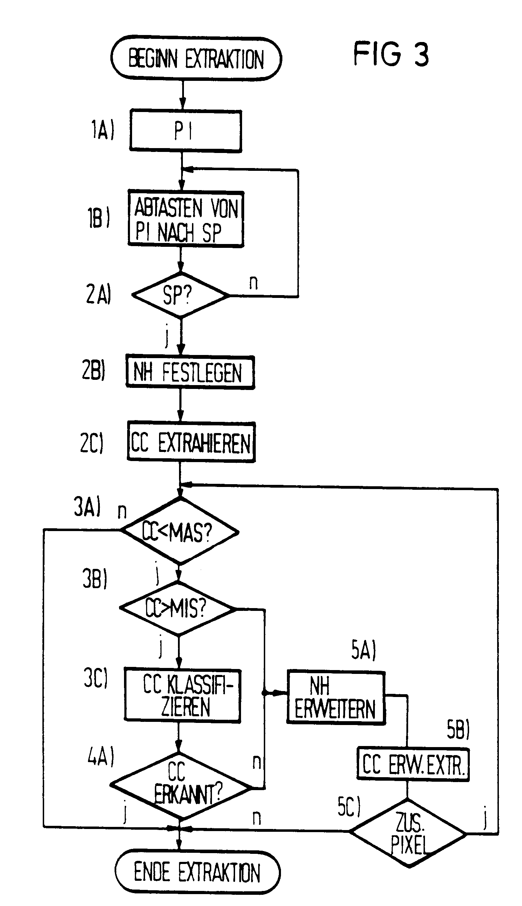

In FIG 3 ist ein Flußdiagramm zum Auffinden eines Zusammenhangsgebiets bei einem binarisierten Bildmuster mit folgenden Verfahrensschritten angegeben:
1A) Ausgangsbasis der Extraktion bildet ein binarisiertes, aus weißen und schwarzen Pixel bestehendes Bildmuster PI, das aus einem zuvor in einer optischen Bildabtasteinrichtung in Bildpunkte aufgelösten Dokument beispielsweise durch Anlegen eines Schwellwerts erzeugt wird.
1B) Das binarisierte Bildmuster PI wird nach einem ersten schwarzen Pixel SP abgetastet, wobei die Abtastung in einer eingestellten Abtastrichtung beginnt.
2A) Für den Fall, daß ein schwarzes Pixel SP gefunden wird, erfolgt die Ermittlung eines ersten Zusammenhangsgebietes, ausgehend von dem aufgefundenen Pixel, während ansonsten die Suche nach einem ersten schwarzen Pixel beim Verfahrensschritt 1B) fortgesetzt wird.
2B) Die Anzahl der zu einer Umgebung NH gehörigen Nachbarschaftspixel, die vorzugsweise gleichzahlig um das Ursprungspixel herum adressiert werden, wird festgelegt. Sie besteht für das Auffinden eines ersten Zusammenhangsgebiets CC1 gemäß FIG 2, beispielsweise aus jeweils acht Pixel. Die Umgebung NH kann beispielsweise auch eine in einer Vorzugsrichtung größere Ausdehnung aufweisen, um strukturelle Besonderheiten der zu extrahierenden Zusammenhangsgebiete zu berücksichtigen. Dadurch entstehen jeweils um das Ursprungspixel herum unsymmetrische Nachbarschaften, bestehend beispielsweise aus zehn oder zwölf Pixel.
2C) Ein erstes Zusammenhangsgebiet CC kann in zuvor beschriebener Weise gemäß FIG 2 schnell aufgefunden und seine aus der Untersuchung der jeweiligen Umgebung mit der festgelegten Anzahl von acht Nachbarschaftspixel resultierende Ist-Größe ermittelt werden.
3A) Die Ist-Größe des aufgefundenen Zusammenhangsgebietes CC wird mit einer vorgebbaren Maximalgröße MAS verglichen, bei deren Erreichen oder Überschreiten, wie im Beispiel des Zusammenhangsgebietes CC3 gemäß FIG 1, der Extraktionsvorgang beendet wird.
3B) Bei Unterschreiten der Maximalgröße wird in einer anschließenden weiteren Vergleichsoperation festgestellt, ob das aufgefundene Zusammenhangsgebiet CC eine vorgebbare Minimalgröße MIS übertrifft. Ist dies nicht der Fall, folgt unmittelbar eine adaptive Umschaltung auf eine ausgedehnte Umgebung NH mit einer vergrößerten Anzahl von jeweils zugehörigen Nachbarschaftspixel gemäß dem Verfahrensschritt 5A).
3C) Liegt die ermittelte Ist-Größe zwischen der Maximal- und der Minimalgröße MAS und MIS, wird ein Klassifikationsprozeß für das aufgefundene Zusammenhangsgebiet CC durchgeführt.
4A) Immer, wenn dem Zusammenhangsgebiet CC eine gültige Nutzinformation zugeordnet und somit ein positives Erkennungsergebnis anhand des aufgefundenen Zusammenhangsgebietes erzielt werden kann, ist der Extraktionsvorgang zu Ende.
5A) Bei einem negativen Klassifikationsergebnis oder bei einem gemäß dem Verfahrensschritt 3B) entstandenen Vergleichsergebnis wird für die zu untersuchende Umgebung NH jedes Pixels des bereits ermittelten Zusammenhangsbietes CC, wie im Beispiel des Zusammenhangsgebietes CC1 gemäß FIG 1, eine erweiterte Anzahl von beispielsweise vierundzwanzig Nachbarschaftspixel gemäß FIG 2 gewählt.
5B) Analog zum Verfahrensschritt 2C) wird ein weiteres Zusammenhangsgebiet CC, wie im Beispiel gemäß FIG 1 das Zusammenhangsgebiet CC2, extrahiert, jedoch anhand der jeweils ausgewählten erweiterten Umgebung NH jedes aufgefundenen schwarzen Pixels.
5C) Ergibt eine Überprüfung des zuletzt extrahierten Zusammenhangsgebietes, daß zusätzliche schwarze Pixel vorliegen, so daß ein gegenüber dem zuvor aufgefundenen Zusammenhangsgebiet vergrößertes Gebiet entsteht, wird der Extraktionsvorgang beim Verfahrensschritt 3A) fortgeführt. Ansonsten ist die Extraktion beendet, beispielsweise dann, wenn die zuvor durchgeführte Vergrößerung der jeweils zu untersuchenden Umgebung zu keiner Überwindung von Bruchstellen in der zu erfassenden Nutzinformation führt.

Somit können auch unterbrochene Nutzinformationen erfaßt werden. Dabei hängt die Wahl der für eine erweiterte Umgebung vorgesehenen Nachbarschaftspixel von der Größe der in den zu lesenden Nutzinformationen am häufigsten vorkommenden Bruchstellen ab. Grundsätzlich gewährleistet das Verfahren gemäß der Erfindung das Auffinden von Nutzinformation mit beliebig großen Unterbrechungen, jedoch ist zwischen Aufwand und Häufigkeit derart vorkommender Bruchstellen abzuwägen, welche Anzahl von Nachbarschaftspixel für eine erweiterte Umgebung am besten geeignet ist.

## Patentansprüche

1. Verfahren zum Auffinden von Zusammenhangsgebieten bei binarisierten Bildmustern (PI), jeweils bestehend aus weißen und schwarzen Pixel, bei dem ausgehend vom Auffinden eines schwarzen Pixels (z.B. SP0) in dem Bildmuster (PI) jeweils eine zum schwarzen Pixel gehörige Umgebung mit einer festgelegten Anzahl von Nachbarschaftspixel auf das Vorliegen weiterer schwarzer Pixel untersucht wird, und bei dem das Zusammenhangsbebiet aus allen aufgefundenen schwarzen Pixel gebildet wird, **dadurch gekennzeichnet**, daß für die jeweils zu untersuchende Umgebung eine geringe Anzahl von Nachbarschaftspixel (z.B. NP01,NP02,...NP08) gewählt und eine daraus resultierende Ist-Größe des gebildeten Zusammenhangsgebiets (z.B. CC1) mit einer vorgebbaren Maximal- und Minimalgröße verglichen wird, daß bei Unterschreitung der Maximal- und Minimalgröße eine gegenüber der festgelegten Anzahl erweiterte Anzahl von Nachbarschaftspixel (z.B. NP01,NP02,...NP24) gewählt wird, mit der die Umgebung jedes zum bereits gebildeten Zusammenhangsgebiet (z.B. CC1) gehörige Pixel (z.B. SP0) untersucht wird,
daß bei Unterschreitung der Maximalgröße und Uberschreitung der Minimalgröße das gebildete Zusammenhangsgebiet (z.B. CC1) einem Klassifikationsverfahren unterzogen wird, und
daß bei negativem Klassifikationsergebnis die Untersuchung der jeweiligen Umgebung mit der erweiterten Anzahl von Nachbarschaftspixel (z.B. NP01,NP02,...NP24) durchgeführt wird.

2. Verfahren nach Anspruch 1, **dadurch gekennzeichnet**, daß das aus der Untersuchung der jeweils erweiterten Umgebung gebildete Zusammenhangsgebiet (z.B. CC2) auf das Vorliegen zusätzlicher schwarzer Pixel (z.B. SPS, SP6,...) überprüft wird, und daß bei zusätzlich aufgefundenen Pixel die aus der Untersuchung resultierende Ist-Größe des Zusammenhangsgebiets (z.B. CC2) für einen erneuten Vergleich zur Verfügung gestellt wird.

3. Verfahren nach Anspruch 1, **dadurch gekennzeichnet**, daß bei Überschreitung der Maximalgröße eine Untersuchung der Umgebung jedes zum jeweiligen Zusammenhangsgebiet (z.B. CC3) gehörigen Pixels unterbleibt.

## Claims

1. Process for detecting continuity zones in binary coded patterns (PI), comprising white and black pixels in each case, in which, starting from the detection of a black pixel (for example SP0) in the pattern (PI), in each case an environment associated with the black pixel with a defined number of neighbouring pixels is examined for the presence of further black pixels, and in which the continuity zone is formed by all the black pixels detected, characterized in that a small number of neighbouring pixels (for example NP01, NP02,...NP08) is selected for the respective environment to be examined and a real size of the continuity zone formed (for example CC1) resulting therefrom is compared with a specifiable maximum and minimum size, and if the maximum and minimum size is not reached, an extended number of neighbouring pixels (for example NP01, NP02...NP24) in relation to the defined number thereof is selected with which the environment of each pixel (for example SP0) belonging to the already formed continuity zone (for example CC1) is examined, and if the maximum size is not reached and the minimum size is exceeded, the continuity zone (for example CC1) formed is subjected to a classification process, and in that in the case of a negative classification result, the examination of the respective environment is carried out with the extended number of neighbouring pixels (for example NP01, NP02,...NP24).

2. Process according to Claim 1, characterized in that the continuity zone (for example CC2) formed from the examination of the respective extended environment is checked for the presence of additional black pixels (for example SP5, SP6,...), and if additional pixels are detected, the real size of the continuity zone (for example CC2) resulting from the examination is made avaiblable for a renewed comparison.

3. Process according to Claim 1, characterized in that if the maximum size is exceeded, no examination of the environment of each pixel belonging to the respective continuity zone (for example CC3) is performed.

## Revendications

1. Procédé pour détecter des zones de continuité dans des modèles d'images binarisés (PI), constitués respectivement par des pixels blancs et noirs, selon lequel, à partir de la détection d'un pixel noir (par exemple SP0) dans le modèle d'image (PI), respectivement un environnement associé aux pixels noirs et comportant un nombre fixé de pixels voisins est examiné pour déterminer s'il existe d'autres pixels noirs, et selon lequel la zone de continuité est formée par tous les pixels noirs trouvés, caractérisé par le fait que pour l'environnement devant être examiné, on choisit un nombre faible de pixels voisins (par exemple NP01, NP02,...NP08) et on compare une grandeur réelle, qui en résulte, de la zone de continuité formée (par exemple CC1), à une grandeur maximale et à une grandeur minimale pouvant être prédéterminées, que lors du dépassement de la grandeur maximale et de la grandeur minimale par valeurs inférieures, qu'on choisit un nombre de pixels voisins (par exemple NP01, NP02, ...NP24), accru par rapport au nombre fixé, et à l'aide duquel on examine l'environnement de chaque pixel (par exemple SP0) associé à la zone de continuité déjà formée (par exemple CC1),
que, lors du dépassement de la valeur maximale par valeurs inférieures et lors du dépassement de la grandeur minimale par valeurs supérieures, la zone de continuité formée (par exemple CC1) est soumise à un procédé de classification, et
que dans le cas d'un résultat négatif de classification, l'examen de l'environnement respectif comportant le nombre accru de pixels voisins (par exemple NP01,NP02,...NP24) est exécuté.

2. Procédé suivant la revendication 1, caractérisé par le fait que la zone de continuité (par exemple CC2), qui est formée à partir de l'examen de l'environnement étendu, est contrôlée pour déterminer s'il existe des pixels noirs supplémentaires (par exemple SP5,SP6, ...) et que dans le cas où un pixel est trouvé en supplément, la grandeur réelle, qui résulte de l'examen, de la zone de continuité (par exemple CC2), est mise à disposition pour une nouvelle comparaison.

3. Procédé suivant la revendication 1, caractérisé par le fait que, dans le cas du dépassement de la grandeur maximale par valeurs supérieures, un examen de l'environnement de chaque pixel, associé à la zone de continuité respective (par exemple CC3), est supprimé.
